(19) Europäisches Patentamt
European Patent Office
Office européen des brevets

(11) **EP 3 594 609 B1**

(12) **EUROPÄISCHE PATENTSCHRIFT**

(45) Veröffentlichungstag und Bekanntmachung des Hinweises auf die Patenterteilung:
**15.09.2021 Patentblatt 2021/37**

(51) Int Cl.:
*F41H 5/02* *(2006.01)*     *F41H 5/04* *(2006.01)*
*F41H 13/00* *(2006.01)*

(21) Anmeldenummer: **19175586.7**

(22) Anmeldetag: **21.05.2019**

(54) **LASERSCHUTZWAND**

LASER SAFETY WALL

PAROI DE PROTECTION CONTRE LES RAYONS LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2018 DE 102018117027**

(43) Veröffentlichungstag der Anmeldung:
**15.01.2020 Patentblatt 2020/03**

(73) Patentinhaber: **Deutsches Zentrum für Luft- und Raumfahrt e.V.**
**51147 Köln (DE)**

(72) Erfinder:
• **Frieß, Martin**
**72636 Frickenhausen (DE)**
• **Mainzer, Bernd**
**84539 Ampfing (DE)**
• **Koch, Dietmar**
**71083 Herrenberg (DE)**
• **Heberer, Erwin M.**
**63150 Heusenstamm (DE)**

(74) Vertreter: **Hoeger, Stellrecht & Partner**
**Patentanwälte mbB**
**Uhlandstrasse 14c**
**70182 Stuttgart (DE)**

(56) Entgegenhaltungen:
**DE-A1-102005 019 730     DE-A1-102007 007 410**
**DE-U1-202004 010 626     DE-U1-202014 006 310**
**US-A- 4 268 562**

**Beschreibung**

Die vorliegende Erfindung betrifft die Verwendung eines ebenen oder gekrümmten Elements aus einem keramischen Faserverbundmaterial als Laserschutzwand zum Schutz gegen den Austritt von Laserstrahlung aus einer lasertechnischen Anlage.

In lasertechnischen Anlagen werden je nach Dimensionierung des verwendeten Lasers zum Teil erhebliche Strahlungsenergien freigesetzt. Dadurch können bei einem unkontrollierten Austritt von Laserstrahlung aus dem Bereich der Anlage, sei es durch eine technische Fehlfunktion oder durch eine Fehlbedienung, erhebliche Schäden an getroffenen Gegenständen und vor allem schwere Verletzungen bei Personen verursacht werden.

Um einen solchen Austritt von Laserstrahlung aus lasertechnischen Anlagen zu verhindern, insbesondere auch für den Fall, dass eine vorgesehene Notabschaltung des Lasers nicht oder zu spät erfolgt, werden Laserschutzwände eingesetzt. Hierbei handelt es sich um Flächenelemente, die je nach Anwendungsfall in einer oder mehreren Richtungen um die lasertechnische Anlage aufgestellt bzw. angeordnet werden, und die einem Energieeintrag durch den Laserstrahl zumindest so lange standhalten sollen, bis eine Abschaltung erfolgt.

Bekannte Laserschutzwände bestehen gemäß dem Stand der Technik insbesondere aus Aluminium und/oder aus Stahl, wobei von diesen Materialien die auftreffende Energie eines Laserstrahls zum Teil absorbiert und zum Teil reflektiert wird. Die Schutzwirkung solcher metallischer Laserschutzwände ist jedoch zeitlich begrenzt, da sie bei entsprechendem Energieeintrag schmelzen und somit vom Laserstrahl durchschlagen werden. Je nach Dicke der Wand und Energie des Laserstrahls betragen die Standzeiten in der Praxis wenige Sekunden bis zu zwei Minuten. Die Verwendung von dickeren Wänden ist ab einer gewissen Dicke aufgrund des hohen Gewichts unpraktikabel. Der Einsatz von Metallen mit besonders hohen Schmelzpunkten ist wiederum unter Kostengesichtspunkten nicht möglich bzw. sinnvoll.

Die DE 10 2007 007 410 A1 offenbart ein Verfahren zur Herstellung eines faserverstärkten carbidkeramischen Bauteils, bei dem unter Verwendung mindestens eines Unidirektional-Geleges und eines Matrixmaterials durch Pyrolyse ein Kohlenstoffkörper hergestellt wird und der Kohlenstoffkörper mit Carbidbildner infiltriert wird. Das mindestens eine Unidirektional-Gelege ist mit einem Beschichtungsmaterial beschichtet, welches bei der Pyrolyse flüchtig ist, und/oder das mindestens eine Unidirektional-Gelege weist ein Querfadensystem mit Querfäden aus einem bei der Pyrolyse flüchtigen Material auf.

Die DE 10 2005 019 730 A1 offenbart eine Carbonfaser-Verbund-Struktur vom Grade NB31 mit einer herabgesetzten Erosionsrate. Die Verbesserung betrifft nur die Anordnung der Näh- und Webfasern und behält die Struktur der Pech-/Carbonfasern bei, die die Hauptwärmeleitungskomponente von NB31 ausmachen. Die Näh- und Webfasern der verbesserten Struktur führen zu einer Steifigkeit der Verstärkung/Armierung des Hitzeschilds, vergleichbar der von NB31. Die verbesserte Struktur bestätigt, dass die Erosionsrate vier- bis fünfmal niedriger im Vergleich zu der von NB31 ist.

Der Erfindung liegt daher die Aufgabe zugrunde, die Verwendung einer Laserschutzwand vorzuschlagen, die eine verbesserte Schutzwirkung aufweist.

Diese Aufgabe wird bei der Verwendung der eingangs genannten Art erfindungsgemäß dadurch gelöst, dass das keramische Faserverbundmaterial ausgewählt ist aus mit Kohlenstofffasern verstärktem Kohlenstoff mit einem Anteil an Siliciumcarbid (C/C-SiC), mit Kohlenstofffasern verstärktem Siliciumcarbid (C/SiC) und mit Siliciumcarbidfasern verstärktem Siliciumcarbid (SiC/SiC).

Keramische Faserverbundmaterialien werden aufgrund von verschiedenen vorteilhaften Eigenschaften, unter anderem aufgrund ihrer hohen Temperaturbeständigkeit, Strukturfestigkeit bei hohen Temperaturen und relativ geringen Dichte, vor allem in der Luft- und Raumfahrttechnik eingesetzt (z.B. für Außenstrukturen von Raumfahrtzeugen), bei Heißgasanwendungen (z.B. in Turbinen oder Raketentriebwerken) und bei Friktionsanwendungen (z.B. für Bremsscheiben, Kupplungen usw.). Als Laserschutzwände wurden diese Materialien bisher noch nicht eingesetzt. Im Rahmen der Erfindung wurde festgestellt, dass eine Laserschutzwand aus einem keramischen Faserverbundmaterial gegenüber einer metallischen Laserschutzwand deutliche Vorteile aufweist.

Im Gegensatz zu Metallen weisen keramische Faserverbundmaterialien keinen Schmelzpunkt auf und behalten auch bei sehr hohen Temperaturen ihre Festigkeit und mechanische Stabilität. Eine Zersetzung erfolgt erst bei wesentlich höheren Temperaturen von in der Regel über 2.800 °C. Daher kann eine erfindungsgemäße Laserschutzwand einen erheblichen Energieeintrag durch einen Laserstrahl aufnehmen, ohne dass sie erweicht oder schmilzt.

Für eine ausreichende Schutzwirkung ist jedoch auch die mechanische Stabilität der Laserschutzwand gegenüber dem Energieeintrag zu berücksichtigen, d.h. es sollte nicht bzw. so spät wie möglich zu einem Bruch des Materials aufgrund von thermischen Spannungen kommen. Auch in dieser Hinsicht erfüllt die erfindungsgemäße Laserschutzwand die entsprechenden Anforderungen in hohem Ausmaß, insbesondere aufgrund der Faserverstärkung des keramischen Materials. Dadurch kann eine zum Teil wesentlich höhere Thermoschockbeständigkeit erreicht werden als bei Metallen, oder auch im Vergleich zu monolithischen Keramiken ohne Faserverstärkung.

Im Rahmen der vorliegenden Erfindung ist das keramische Faserverbundmaterial zur Herstellung der Laserschutzwand ausgewählt aus mit Kohlenstofffasern verstärktem Kohlenstoff mit einem Anteil an Siliciumcarbid (C/C-SiC), mit Kohlenstofffasern verstärktem Siliciumcarbid (C/SiC) und mit Siliciumcarbidfasern verstärktem Siliciumcarbid (SiC/SiC). Mit derartigen Faserverbundkeramiken, deren Herstellung und Eigenschaften aus dem Stand der Technik bekannt sind, können die Vorteile der Erfindung in hohem Ausmaß verwirklicht werden.

Bei einer bevorzugten Ausführungsform der Erfindung besteht die Laserschutzwand aus einem C/C-SiC-Material. Eine solche Laserschutzwand ist bevorzugt hergestellt durch das sogenannte LSI-Verfahren (Liquid Silicon Infiltration), umfassend das Infiltrieren von Kohlenstofffasern mit einem wärmehärtbaren Harz, das Härten des Harzes zu einer Polymermatrix, das Pyrolysieren der Polymermatrix zu einer Kohlenstoffmatrix, und das Infiltrieren der Kohlenstoffmatrix mit den darin eingebetteten Kohlenstofffasern mit flüssigem Silicium.

Der Vorteil des LSI-Verfahrens besteht insbesondere darin, dass hiermit Formkörper aus einem C/C-SiC-Material mit sehr variablen Geometrien und Abmessungen hergestellt werden können, so dass die Herstellung einer Laserschutzwand mit der typischerweise benötigten Größe und Form kein Problem darstellt. Die Laserschutzwand kann insbesondere als ebenes, plattenförmiges Element ausgebildet werden, oder auch eine gekrümmte Form aufweisen.

Für die Herstellung der Laserschutzwand werden die Kohlenstofffasern bevorzugt in Form eines Gewebes oder eines Multiaxialgeleges eingesetzt, bei dem sich die Fasern bzw. Faserbündel entlang zweier zueinander senkrechter Raumrichtungen in der Ebene der Laserschutzwand erstrecken. Dadurch weist die hergestellte Laserschutzwand weitgehend isotrope Eigenschaften bezüglich dieser Raumrichtungen auf.

Bei einer weiteren vorteilhaften Ausführungsform der Erfindung sind die Kohlenstofffasern ausschließlich oder teilweise Pechfasern. Durch die Verwendung von Pechfasern anstelle der üblicherweise eingesetzten Kohlenstofffasern auf Basis von Polyacrylnitril kann die Schutzwirkung der erfindungsgemäßen Laserschutzwand weiter verbessert werden.

Pechfasern, die bevorzugt durch Schmelzspinnen und Carbonisieren von Pech, insbesondere von Kohlenteerpech, hergestellt werden, zeichnen sich durch eine in höherem Maße anisotrope Mikrostruktur aus, d.h. durch einen höheren Orientierungsgrad der Moleküle entlang der Faserrichtung. Sie weisen eine höhere Wärmeleitfähigkeit auf als Kohlenstofffasern aus Polyacrylnitril, und es hat sich gezeigt, dass durch ihre Verwendung auch die Wärmeleitfähigkeit der erfindungsgemäßen Laserschutzwand verbessert werden kann. Für die Widerstandsfähigkeit gegenüber einem Energieeintrag durch einen Laserstrahl ist dies von großem Vorteil, weil so die Energie, die in einen sehr kleinen Bereich eingebracht wird, schneller auf einen größeren Bereich der Laserschutzwand verteilt werden kann, so dass der Temperaturanstieg an der vom Laserstrahl getroffenen Stelle begrenzt wird.

Es hat sich gezeigt, dass Pechfasern im Vergleich zu Kohlenstofffasern aus Polyacrylnitril bei der Durchführung des LSI-Verfahrens zum Teil in einem höheren Ausmaß siliziert werden, da ihre Anbindung an die Kohlenstoffmatrix (Faser/Matrix-Bindung) geringer sein kann. Da eine Silizierung der Fasern im Hinblick auf die mechanischen Eigenschaften der Faserverbundkeramik in der Regel unerwünscht ist, ist es von Vorteil, wenn die Pechfasern beschichtet sind, um eine solche Silizierung zu vermeiden. Vorzugsweise sind die Pechfasern mit einem Polysilazan oder mit einem Borid beschichtet, insbesondere mit Titanborid.

Kommerziell erhältliche Pechfasern, die in dem LSI-Verfahren eingesetzt werden können, sind z.B. das Produkt YS-95A von der Nippon Graphite Fiber Corporation oder das Produkt K63A12 von Mitsubishi Plastics.

Das in dem LSI-Verfahren eingesetzte wärmehartbare Harz ist bevorzugt ausgewählt aus Phenolharzen, Epoxidharzen und Acrylharzen. Dabei sind Phenolharze aufgrund ihres hohen Kohlenstoffanteils besonders bevorzugt.

Wie bereits oben erwähnt, weist die erfindungsgemäße Laserschutzwand aufgrund der vorteilhaften Eigenschaften des keramischen Faserverbundmaterials eine hohe Thermoschockbeständigkeit auf, d.h. der hohe Energieeintrag durch den Laserstrahl in einem relativ kleinen Bereich führt nicht - oder im Vergleich zu anderen Materialien erst später - aufgrund von thermischen Spannungen zu einem Strukturversagen (z.B. zu einem Bruch). Die Thermoschockbeständigkeit von Werkstoffen lässt sich insbesondere durch die Thermoschockkoeffizienten $R_1$ und $R_2$ quantifizieren, die wie folgt definiert sind:

$$R_1 = R_m / (E \cdot \alpha) \qquad [K]$$

$$R_2 = R_1 \cdot \lambda \qquad [W/m]$$

Hierbei sind $R_m$ die Zugfestigkeit, E der Elastizitätsmodul, $\alpha$ der thermische Ausdehnungskoeffizient und $\lambda$ die Wärmeleitfähigkeit des Materials.

Das keramische Faserverbundmaterial der erfindungsgemäßen Laserschutzwand weist günstigerweise einen Thermoschockkoeffizienten $R_1$ von mindestens 500 K auf, bevorzugt von mindestens 1.000 K. Der Thermoschockkoeffizient $R_2$ des keramischen Faserverbundmaterials beträgt günstigerweise mindestens 8.000 W/m, bevorzugt mindestens 20.000 W/m. Entsprechend hohe Werte können durch eine entsprechende Auswahl der Fasern, des Harzes und der Bedingungen bei der Pyrolyse und Silizierung im LSI-Verfahren erreicht werden.

Beispielsweise ist ein sogenannter XD-Werkstoff aus C/C-SiC verfügbar (SILCA-XD), der einen $R_1$-Wert von etwa 1.400 K und einen $R_2$-Wert von etwa

30.000 W/m erreicht. Ein solches Faserverbundmaterial übertrifft die entsprechenden Werte von vielen Metallen und monolithischen Keramiken zum Teil deutlich, und eignet sich in besonderem Maße zur Herstellung der erfindungsgemäßen Laserschutzwand.

Die erfindungsgemäße Laserschutzwand kann in Abhängigkeit von der Dimensionierung der lasertechnischen Anlage üblicherweise eine Dicke von 1 bis 8 mm aufweisen, bevorzugt von 2 bis 5 mm. Gegenüber einer metallischen Laserschutzwand mit derselben Dicke ergibt sich mit der vorliegenden Erfindung sowohl eine höhere Schutzwirkung als auch ein geringeres Gewicht.

Die Abmessungen der Laserschutzwand können in Abhängigkeit von den jeweiligen Erfordernissen und räumlichen Gegebenheiten relativ frei gewählt werden. Typischerweise wird die erfindungsgemäße Laserschutzwand eine Breite und/oder Höhe im Bereich von 0,5 bis 3 m aufweisen. Wie bereits oben erwähnt, kann die Laserschutzwand als ebenes, plattenförmiges Element ausgebildet sein, oder auch eine Krümmung aufweisen.

Diese und weitere Vorteile der Erfindung werden anhand des nachfolgenden Ausführungsbeispiels unter Bezugnahme auf die Zeichnung näher beschrieben. Es zeigt:

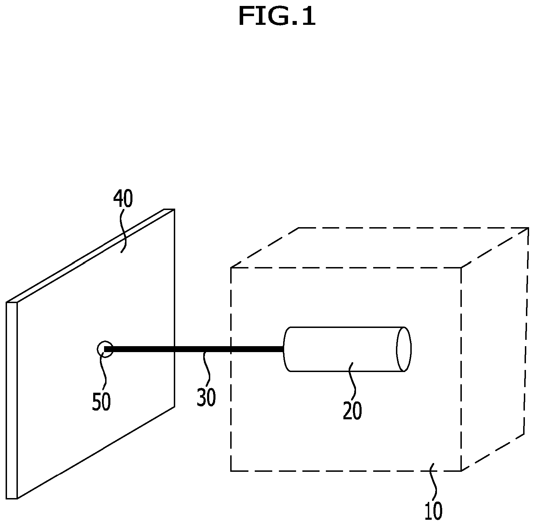

Fig. 1: Schematische Darstellung einer lasertechnischen Anlage mit einer erfindungsgemäßen Laserschutzwand.

In der Fig. 1 ist schematisch eine lasertechnische Anlage 10 dargestellt, von deren verschiedenen Komponenten hier nur ein Laser 20 gezeigt ist. Dieser Laser 20 erzeugt einen Laserstrahl 30, der bei einer technischen Fehlfunktion oder bei einer Fehlbedienung der Anlage 10 unkontrolliert aus dieser austreten kann.

Um zu verhindern, dass durch den austretenden Laserstrahl 30 außerhalb der lasertechnischen Anlage 10 Sach- oder Personenschäden verursacht werden, ist eine erfindungsgemäße Laserschutzwand 40 vorgesehen. Diese Laserschutzwand 40 wird von dem austretenden Laserstrahl in einem Auftreffbereich 50 getroffen.

In der Fig. 1 ist aus Gründen der Übersichtlichkeit nur eine Laserschutzwand 40 dargestellt. Es können jedoch vorteilhafterweise auch mehrere Laserschutzwände vorgesehen sein, die in Abhängigkeit von den räumlichen Gegebenheiten auf verschiedenen Seiten der lasertechnischen Anlage 10 angeordnet sind.

Die Laserschutzwand 40 besteht aus einem keramischen Faserverbundmaterial, beispielsweise aus mit Kohlenstofffasern verstärktem Kohlenstoff mit einem Anteil an Siliciumcarbid (C/C-SiC). Das keramische Faserverbundmaterial weist eine hohe Temperaturbeständigkeit und Thermoschockbeständigkeit auf, so dass es die in den Auftreffbereich 50 eingebrachte Energie des Laserstrahls 30 über einen gewissen Zeitraum aufnehmen kann, ohne dass es zu einem Strukturversagen kommt.

Um die Schutzwirkung einer erfindungsgemäßen Laserschutzwand in der Praxis zu untersuchen, wurde eine C/C-SiC-Keramik in Form einer ebenen Platte mit einer Dicke von 3 mm hergestellt. Hierzu wurden Kohlenstofffasern auf Basis von Polyacrylnitril vom Typ T800 im Harzinjektionsverfahren mit einem Phenolharz infiltriert. Nach dem Härten des Harzes wurde der Formkörper bei ca. 900 °C in einer Stickstoffatmosphäre pyrolysiert und die gebildete Kohlenstoffmatrix anschließend bei einer Temperatur von ca. 1.600 °C im Vakuum über einen Zeitraum von 15 Stunden mit flüssigem Silicium infiltriert (Silizierung).

Diese Laserschutzwand wurde mit dem Laserstrahl eines fasergekoppelten Diodenlasers mit einer Wellenlänge von 980 bis 1.020 nm und einer Leistung von 5 kW beaufschlagt. Der Energieeintrag in dem 4 cm x 20 cm großen Auftreffbereich betrug 625 W/cm$^2$.

Nach einer Einwirkdauer des Laserstrahls von 90 Sekunden zeigten sich nur oberflächliche Beeinträchtigungen des keramischen Faserverbundmaterials der Laserschutzwand. Die strukturelle Integrität blieb jedoch vollständig erhalten.

## Bezugszeichenliste

| 10 | lasertechnische Anlage |
| 20 | Laser |
| 30 | Laserstrahl |
| 40 | Laserschutzwand |
| 50 | Auftreffbereich |

## Patentansprüche

1. Verwendung eines ebenen oder gekrümmten Elements aus einem keramischen Faserverbundmaterial als Laserschutzwand zum Schutz gegen den Austritt von Laserstrahlung aus einer lasertechnischen Anlage, **dadurch gekennzeichnet, dass** das keramische Faserverbundmaterial ausgewählt ist aus mit Kohlenstofffasern verstärktem Kohlenstoff mit einem Anteil an Siliciumcarbid (C/C-SiC), mit Kohlenstofffasern verstärktem Siliciumcarbid (C/SiC) und mit Siliciumcarbidfasern verstärktem Siliciumcarbid (SiC/SiC).

2. Verwendung nach Anspruch 1, wobei die Laserschutzwand aus einem C/C-SiC-Material besteht, und bevorzugt hergestellt ist durch Infiltrieren von Kohlenstofffasern mit einem wärmehärtbaren Harz, Härten des Harzes zu einer Polymermatrix, Pyrolysieren der Polymermatrix zu einer Kohlenstoffmatrix, und Infiltrieren der Kohlenstoffmatrix mir den darin eingebetteten Kohlenstofffasern mit flüssigem Silicium.

3. Verwendung nach Anspruch 2, wobei die Kohlenstofffasern in Form eines Gewebes oder eines Multiaxialgeleges eingesetzt werden.

4. Verwendung nach Anspruch 2 oder 3, wobei die Kohlenstofffasern ausschließlich oder teilweise Pechfasern sind.

5. Verwendung nach Anspruch 4, wobei die Pechfasern beschichtet sind, bevorzugt mit einem Polysilazan oder mit einem Borid, insbesondere mit Titanborid.

6. Verwendung nach einem der Ansprüche 2 bis 5, wobei das wärmehärtbare Harz ausgewählt ist aus Phenolharzen, Epoxidharzen und Acrylharzen.

7. Verwendung nach einem der vorangehenden Ansprüche, wobei das keramische Faserverbundmaterial einen Thermoschockkoeffizienten $R_1$ von mindestens 500 K aufweist, bevorzugt von mindestens 1.000 K.

8. Verwendung nach einem der vorangehenden Ansprüche, wobei das keramische Faserverbundmaterial einen Thermoschockkoeffizienten $R_2$ von mindestens 8.000 W/m aufweist, bevorzugt von mindestens 20.000 W/m.

9. Verwendung nach einem der vorangehenden Ansprüche, wobei die Laserschutzwand eine Dicke von 1 bis 8 mm aufweist, bevorzugt von 2 bis 5 mm.

10. Verwendung nach einem der vorhergehenden Ansprüche, wobei die Laserschutzwand eine Breite und/oder Höhe im Bereich von 0,5 bis 3 m aufweist.

**Claims**

1. Use of a plane or curved element of a ceramic matrix composite as a laser protection wall for protection against a leakage of laser radiation from a laser device,
**characterized in that** the ceramic matrix composite is selected from carbon fiber-reinforced carbon with a proportion of silicon carbide (C/C-SiC), carbon fiber-reinforced silicon carbide (C/SiC), and silicon carbide fiber-reinforced silicion carbide (SiC/SiC).

2. Use according to claim 1, wherein the laser protection wall consists of a C/C-SiC material, and is preferably made by infiltrating carbon fibers with a thermosetting resin, curing the resin to form a polymer matrix, pyrolysing the polymer matrix to form a carbon matrix, and infiltrating the carbon matrix with the carbon fibers embedded therein with liquid silicon.

3. Use according to claim 2, wherein the carbon fibers are employed in the form of a woven fabric or a multiaxial non-woven fabric.

4. Use according to claim 2 or 3, wherein the carbon fibers are exclusively or partially pitch fibers.

5. Use according to claim 4, wherein the pitch fibers are coated, preferably with a polysilazane or with a boride, in particular with titanium boride.

6. Use according to any one of claims 2 to 5, wherein the thermosetting resin is selected from phenolic resins, epoxy resins and acrylic resins.

7. Use according to any one of the preceding claims, wherein the ceramic matrix composite has a thermal shock coefficient $R_1$ of at least 500 K, preferably of at least 1,000 K.

8. Use according to any one of the preceding claims, wherein the ceramic matrix composite has a thermal shock coefficient $R_2$ of at least 8,000 W/m, preferably of at least 20,000 W/m.

9. Use according to any one of the preceding claims, wherein the laser protection wall has a thickness of 1 to 8 mm, preferably of 2 to 5 mm.

10. Use according to any one of the preceding claims, wherein the laser protection wall has a width and height in the range from 0.5 to 3 m.

**Revendications**

1. Utilisation d'un élément plan ou incurvé composé d'un matériau composite à base de fibres en céramique en tant que paroi de protection contre les rayons laser pour la protection contre la sortie d'un rayonnement laser hors d'une installation technique laser,
**caractérisée en ce que** le matériau composite à base de fibres en céramique est choisi parmi du carbone renforcé par des fibres de carbone avec une fraction de carbure de silicium (C/C-SiC), du carbure de silicium renforcé par des fibres de carbone (C/SiC) et du carbure de silicium renforcé par des fibres de carbure de silicium (SiC/SiC).

2. Utilisation selon la revendication 1, dans laquelle la paroi de protection contre les rayons laser comprend un matériau à base de C/C-SiC et est fabriquée de manière préférée par infiltration de fibres de carbone avec une résine pouvant être durcie à la chaleur, durcissement de la résine en une matrice en polymère, par pyrolyse de la matrice polymère en une matrice en carbone, et infiltration de la matrice en carbone avec les fibres de carbone incorporées dans celle-ci avec du silicium liquide.

3. Utilisation selon la revendication 2, dans laquelle les fibres de carbone sont utilisées sous la forme d'un tissu ou d'un matelas multiaxial.

4. Utilisation selon la revendication 2 ou 3, dans laquelle les fibres de carbone sont exclusivement ou en partie des fibres de brai.

5. Utilisation selon la revendication 4, dans laquelle les fibres de brai sont revêtues, de manière préférée de polysilazane ou d'un borure, en particulier de borure de titane.

6. Utilisation selon l'une quelconque des revendications 2 à 5, dans laquelle la résine pouvant être durcie à la chaleur est choisie parmi des résines phénoliques, des résines époxy et des résines acryliques.

7. Utilisation selon l'une quelconque des revendications précédentes, dans laquelle le matériau composite à base de fibres en céramique présente un coefficient de choc thermique $R_1$ d'au moins 500 K, de manière préférée d'au moins 1 000 K.

8. Utilisation selon l'une quelconque des revendications précédentes, dans laquelle le matériau composite à base de fibres en céramique présente un coefficient de choc thermique $R_2$ d'au moins 8 000 W/m, de manière préférée d'au moins 20 000 W/m.

9. Utilisation selon l'une quelconque des revendications précédentes, dans laquelle la paroi de protection contre les rayons laser présente une épaisseur de 1 à 8 mm, de manière préférée de 2 à 5 mm.

10. Utilisation selon l'une quelconque des revendications précédentes, dans laquelle la paroi de protection contre les rayons laser présente une largeur et/ou une hauteur dans la plage de 0,5 à 3 m.

# FIG.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007007410 A1
- DE 102005019730 A1